# FASCICULE DE BREVET EUROPEEN

(11) **EP 0 754 276 B1**
(45) Date de publication et mention de la délivrance du brevet: **29.12.1999**
(21) Numéro de dépôt: 96903052.7
(22) Date de dépôt: 06.02.1996
(51) Int. Cl.: F16F 15/131, F16F 15/139

(54) **DOUBLE VOLANT AMORTISSEUR DE TORSION, NOTAMMENT POUR VEHICULE AUTOMOBILE**
DOPPELSCHWUNGRAD-TORSIONSDÄMPFER,INSBESONDERE FÜR EIN KRAFTFAHRZEUG
DOUBLE TORSION DAMPING FLYWHEEL, IN PARTICULAR FOR MOTOR VEHICLES

(30) Priorité: 08.02.1995 FR 9501542
(43) Date de publication de la demande: 22.01.1997
(73) Titulaire: VALEO, 75017 Paris (FR)
(72) Inventeur: MOKDAD, Ayman, F-93400 Saint-Ouen (FR)
(74) Mandataire: Gamonal, Didier
(86) Numéro de dépôt international: FR9600189
(87) Numéro de publication internationale: WO9624785

(56) Documents cités:
- WO-A-94/27062
- DE-A- 4 417 108
- DE-A- 4 418 284
- FR-A- 2 637 666
- FR-A- 2 690 722

## Description

L'invention se rapporte à un double volant amortisseur de torsion formant dispositif de transmission de couple, notamment pour véhicule automobile, du type comportant deux masses coaxiales montées mobiles l'une par rapport à l'autre à l'encontre de moyens élastiques et de moyens de frottement.

On connaît un double volant amortisseur de torsion comportant une première masse destinée à être fixée à un arbre menant, tel que par exemple le vilebrequin du moteur d'un véhicule automobile, et une deuxième masse formant un plateau de réaction pour un embrayage à friction.

Un tel double volant est décrit par exemple dans le document WO 95/17618.

Dans cette demande la première masse est fixée à l'aide de vis sur le vilebrequin du moteur et la deuxième masse présente, en coïncidence avec les vis, des passages pour accès aux têtes des vis.

La deuxième masse est montée rotative ou tournante sur la première masse à l'aide d'un roulement à billes interposé radialement entre la périphérie externe d'un moyeu étagé appartenant à la première masse et la périphérie interne du plateau de réaction de la seconde masse.

Le moyeu est doté d'un épaulement formé à la faveur de son changement de diamètre. Sa portion de plus grand diamètre se raccorde à un plateau et s'étend radialement au-dessus de la bague externe du roulement. Sa portion de plus faible diamètre porte le roulement.

Ainsi l'épaulement est de hauteur voisine à celle du roulement. Ce roulement est implanté radialement en dessous des passages précités de la deuxième masse.

Les moyens de frottement interviennent au sein de cassettes servant au montage d'organes élastiques appartenant aux moyens élastiques.

Avec ce type de type de dispositif on obtient une bonne filtration des vibrations. Néanmoins il est souhaitable d'implanter des moyens de frottement pour encore optimiser la filtration des vibrations.

La présente invention a pour but de répondre à ce souhait.

Suivant l'invention un double volant amortisseur de torsion connu de FR-A-2 690 722 et conforme au préambule de la revendication 1 est caractérisé en ce que les moyens de frottement à action axiale, dits premiers moyens de frottement, sont implantés au moins en majeure partie radialement en dessous desdits passages de la deuxième masse et axialement entre l'épaulement du moyeu de la première masse et le roulement à billes.

Selon une caractéristique, les moyens de frottement comportent une rondelle de frottement propre à engrener avec la seconde masse et à frotter contre l'épaulement du moyeu.

Grâce à l'invention on crée un frottement qui permet de mieux filtrer les vibrations notamment dans le domaine de régime de ralenti du moteur à combustion interne.

En outre on tire parti de la configuration du moyeu et notamment de son épaulement ayant par construction une hauteur voisine de celle du roulement. Cet épaulement sert de face de frottement à la rondelle de frottement précitée. Ici le moyeu comporte trois portions, sa portion de plus grand diamètre étant déterminée par l'implantation des vis de fixation, sa portion de diamètre intermédiaire servant à la liaison en rotation d'une rondelle d'application ou de pression, que présentent les premiers moyens de frottement, tandis que sa portion de plus faible diamètre sert au montage de la bague interne du roulement à billes.

Ainsi ce moyeu, d'orientation axiale, dirigé vers la seconde masse, présente deux épaulements, la hauteur de l'épaulement servant de face de frottement à la rondelle de frottement précitée étant globalement de hauteur égale à celle du roulement à billes. Ce moyeu a une bonne résistance mécanique.

De préférence le frottement précité intervient en permanence. On notera que le plateau de réaction peut atteindre des températures non négligeables en fonctionnement. La localisation des moyens de frottement, au voisinage des passages de la seconde masse, permet une bonne ventilation de la rondelle de frottement, que comportent les moyens de frottement, qui sont ainsi ménagés.

Le roulement à billes est également ménagé et ventilé grâce aux passages précités.

On notera que l'alésage interne du moyeu permet une pénétration du moyeu du disque de friction de l'embrayage associé à la deuxième masse au bénéfice d'une réduction de l'encombrement axial.

Cette disposition se marie bien avec la configuration de moyens élastiques agissant globalement radialement entre les deux masses, car elle permet d'augmenter radialement la taille des moyens élastiques tout en ayant un frottement optimal.

L'invention sera mieux comprise à la lumière de la description qui va suivre d'un exemple de réalisation, description faite en référence aux dessins annexés sur lesquels :
- la figure 1 est une vue en coupe axiale d'un double volant amortisseur selon l'invention et ce selon la ligne 1-1 de la figure 2 ;
- la figure 2 est une vue de face du double volant de la figure 1, avec arrachement local laissant apparaître les cassettes appartenant aux moyens élastiques ;
- la figure 3 est une vue en coupe selon la ligne 3-3 de la figure 2 ;
- la figure 4 est une vue partielle à plus grande échelle correspondant à la figure 2 ;
- la figure 5 est une vue en perspective montrant les moyens de frottement installés dans la pièce porteuse ;
- la figure 6 est une vue à plus grande échelle de la partie centrale de la figure 1 ;
- la figure 7 est une vue partielle analogue à la figure 6 pour un autre exemple de réalisation .
- la figure 8 est une vue analogue à la figure 1 pour un autre exemple de réalisation.

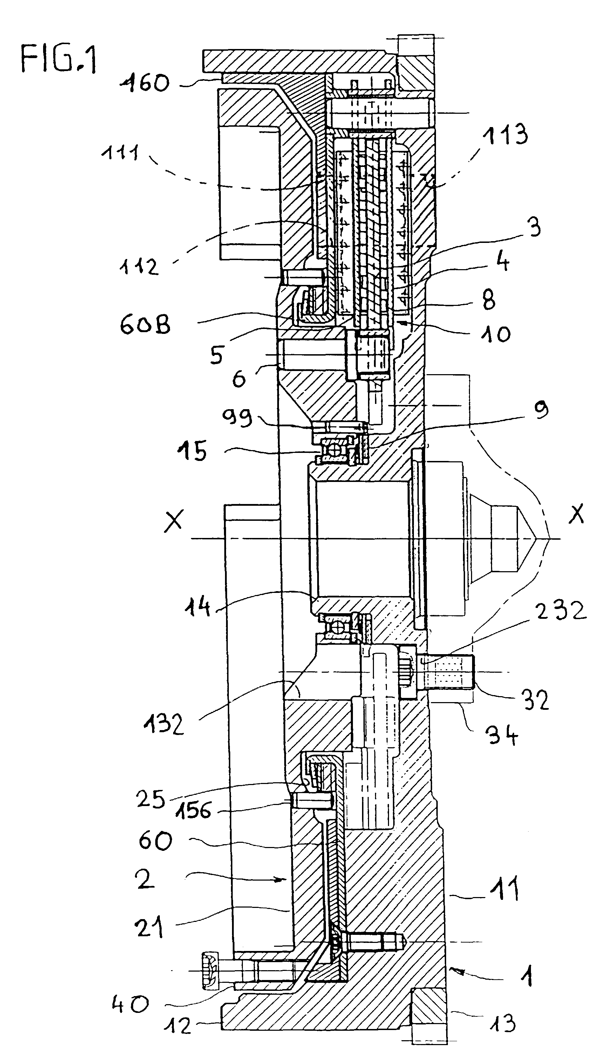

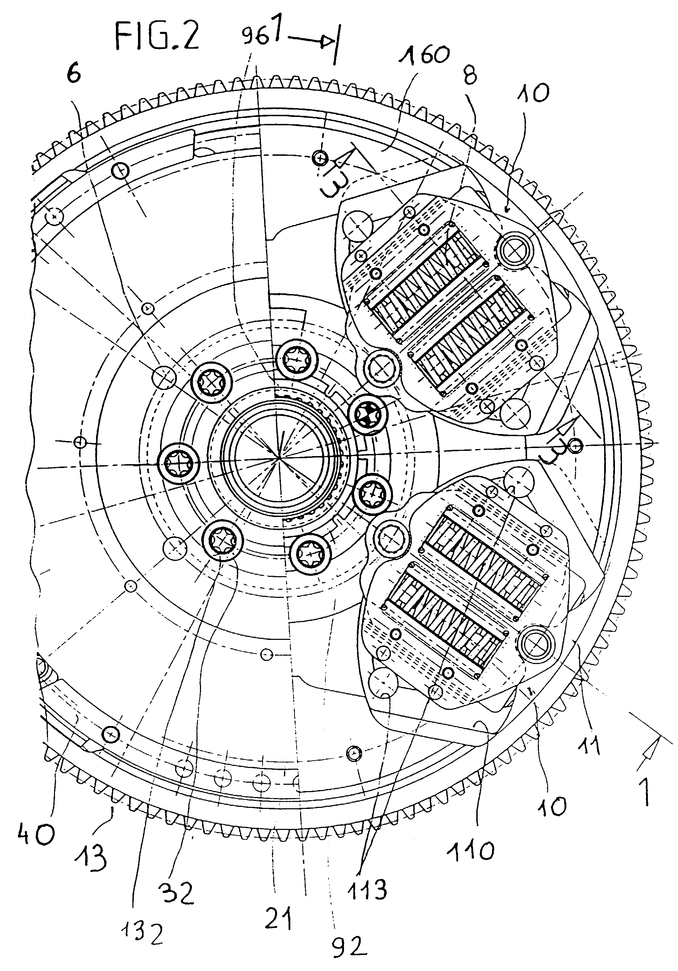

Sur les figures 1 et 2 est illustré un double volant amortisseur de torsion pour véhicule automobile comportant deux masses coaxiales 1 et 2 montées mobiles l'une par rapport à l'autre à l'encontre de moyens élastiques globalement à action radiale et de moyens de frottement à action axiale, qui seront décrits plus loin en détail.

Les deux masses 1 et 2 tournent l'une par rapport à l'autre autour de l'axe de symétrie axial X-X.

La première masse 1 comporte, ici d'un seul tenant, un plateau 11 et un moyeu central tubulaire 14 autour duquel est montée en rotation la masse 2.

La seconde masse 2 comporte également un plateau 21 troué centralement et s'étendant parallèlement au plateau 11.

Un palier, ici un roulement à billes 15, est interposé radialement entre la périphérie externe du moyeu 14 et la périphérie interne (l'alésage interne ) du plateau 21.

La seconde masse 2 constitue, par son plateau 21, le plateau de réaction d'un embrayage à friction comportant, de manière connue en soi et non représentés ici, un plateau de pression, un diaphragme, un couvercle appartenant à un mécanisme d'embrayage et un disque de friction.

Le plateau 21 présente ainsi dorsalement une face de friction pour la garniture de frottement concernée du disque de friction.

La périphérie externe du plateau de réaction 21 présente d'un seul tenant une jupe annulaire 40 servant de manière connue en soi à la fixation du couvercle de l'embrayage (non représenté).

A la figure 1 on a représenté l'une des vis servant à fixer le couvercle sur la jupe 40, ici fractionnée.

La première masse tournante 1 est reliée par des vis 32, par la périphérie interne de son plateau 11, à un arbre menant 34, ici le vilebrequin d'un moteur à combustion interne du véhicule automobile, tandis que la seconde masse tournante 2 est liée en rotation de manière débrayable par l'intermédiaire du mécanisme d'embrayage et du disque de friction (non représentés) à un arbre mené, ici celui d'entrée de la boîte de vitesses du véhicule.

Le plateau 11 de la première masse 1 se prolonge d'un seul tenant à sa périphérie externe par une jupe cylindrique d'orientation axiale 12 entourant la jupe 40.

La masse 1 porte à sa périphérie externe une couronne de démarrage 13 destinée à être entraînée par le pignon d'un démarreur (non représenté).

Les moyens élastiques comportent des organes élastiques 8 constitués ici de ressorts à boudins. Les moyens élastiques sont montés à articulation à la périphérie externe de la première masse 1, ici à la périphérie externe du plateau 11, et à la périphérie interne de la seconde masse 2, ici à la périphérie interne du plateau 21. Ces moyens élastiques interviennent globalement radialement entre les plateaux 11 et 21 et sont montés dans des cassettes articulées 10 comportant de manière connue en soi, d'une part, un voile 3 doté de logements pour le montage parallèlement de deux paires de ressorts à boudin 8 concentriques et, d'autre part, deux rondelles de guidage 4 et 5 disposées de part et d'autre du voile 3 et présentant également des logements en regard du logement du voile 3 pour le montage desdits ressorts 8.

Les logements consistent ici en des fenêtres (figures 2 à 4).

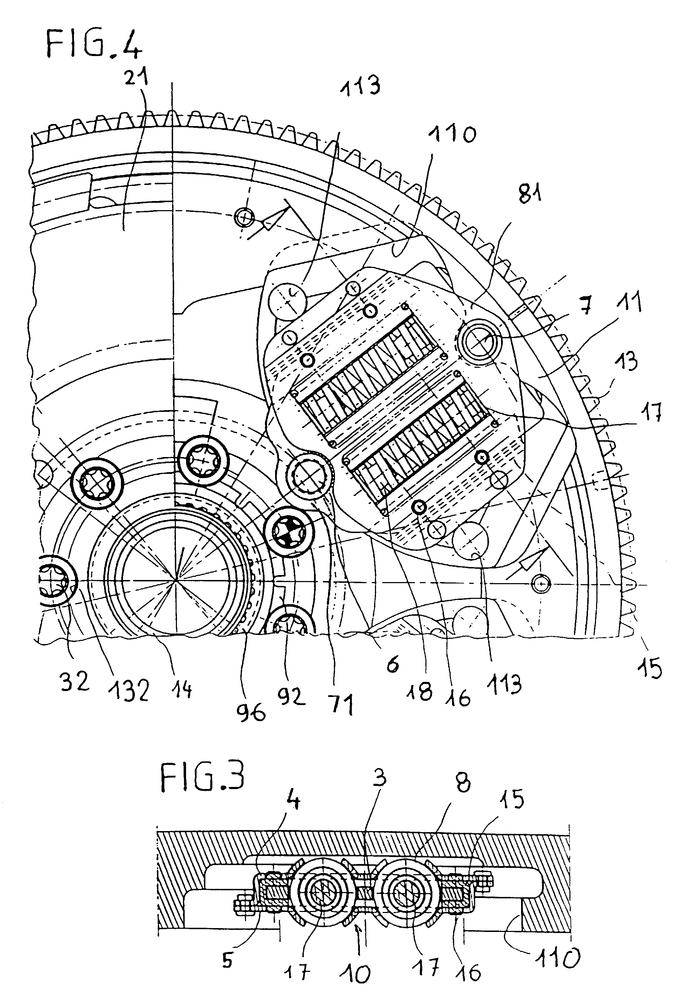

Les rondelles de guidage 4, 5 sont fixées latéralement par rivetage l'une à l'autre (figure 3). Le voile 3 et les rondelles de guidage 4,5 sont montés tête-bêche, le voile 3 présentant à sa périphérie interne une extension 71 pour le montage d'un axe d'articulation 6 sur la masse 2, tandis que les rondelles de guidage 4 et 5 présentent à leur périphérie externe respective également une extension 81, en regard de l'une de l'autre, pour le montage d'un axe d'articulation 7 sur la masse 1.

Chaque extension 71 du voile 3 est trouée pour passage d'un manchon solidarisé, ici par soudage, au voile 3.

De même les extensions 81 des rondelles de guidage 4,5 sont trouées axialement en coïncidence pour passage d'un manchon solidarisé, ici par soudage, à chacune de ses extrémités à la rondelle de guidage 4,5 concernée.

Les axes 6 et 7 sont emmanchés à force respectivement dans le plateau 21 et dans le plateau 11 et traversent les manchons précités avec interposition de paliers, ici des douilles à faible coefficient de frottement en variante des roulements à aiguilles, pour montage à articulation des cassettes 10 sur les masses 1,2.

L'axe 6 est épaulé pour calage axial du manchon du voile 3.

L'axe 7 est emmanché à force dans le plateau 11 et dans une cheminée solidaire d'une pièce porteuse 60 décrite ci-après. Le manchon des rondelles de guidage 4,5 est donc calé axialement entre le plateau 11 et la cheminée de la pièce 60. Cette pièce 60 est prise en sandwich entre la face dorsale du plateau 11 et une pièce de rigidification 160 adjacente au plateau 11.

Des vis, en variante des pions, assemblent les pièces 160,60 au plateau 11, la pièce 60 étant serrée entre le plateau 11 et la pièce 160 servant de renfort à la pièce 60. La pièce de rigidification 160 est massive et présente à sa périphérie externe une jupe annulaire d'orientation axiale entourant la jupe 40 de la masse 2.

La pièce 160 recouvre et rigidifie ainsi le plateau 11 ici en matière moulable, telle que de la fonte tout comme le plateau 21.

Ainsi au niveau des cassettes 10, la jupe 12 du plateau 11 est d'épaisseur réduite (voir également figure 3).

La pièce 160 augmente donc l'inertie de la première masse 1 et ce de manière simple, tout en renforçant la jupe 12 et le plateau 11.

On notera que le voile 3 est évidé à sa périphérie externe pour passage du manchon des rondelles de guidage 4,5 et de l'axe 7, tandis que les rondelles de guidage 4,5 sont évidées à leur périphérie interne pour passage du manchon du voile 3 et de l'axe 6.

La pièce porteuse 60 avec sa douille forme une chape avec le plateau 11 pour montage des axes 7. La pièce 160 renforce la chape. A cet effet le plateau 11 présente des cavités 110 pour le logement des axes 7 et des cassettes (figures 2 à 4). Toutes ces formes sont obtenues aisément par moulage et c'est pour cette raison qu'à la figure 2 on a supprimé les pièces 60,160 pour bien faire apparaître la forme du plateau 11.

Ici quatre cassettes 10 réparties régulièrement circonférentiellement sont prévues, bien entendu cela dépend des applications.

La pièce 60 dite porteuse est ménagée entre les masses 1 et 2 et est fixée à la périphérie externe du plateau 11.

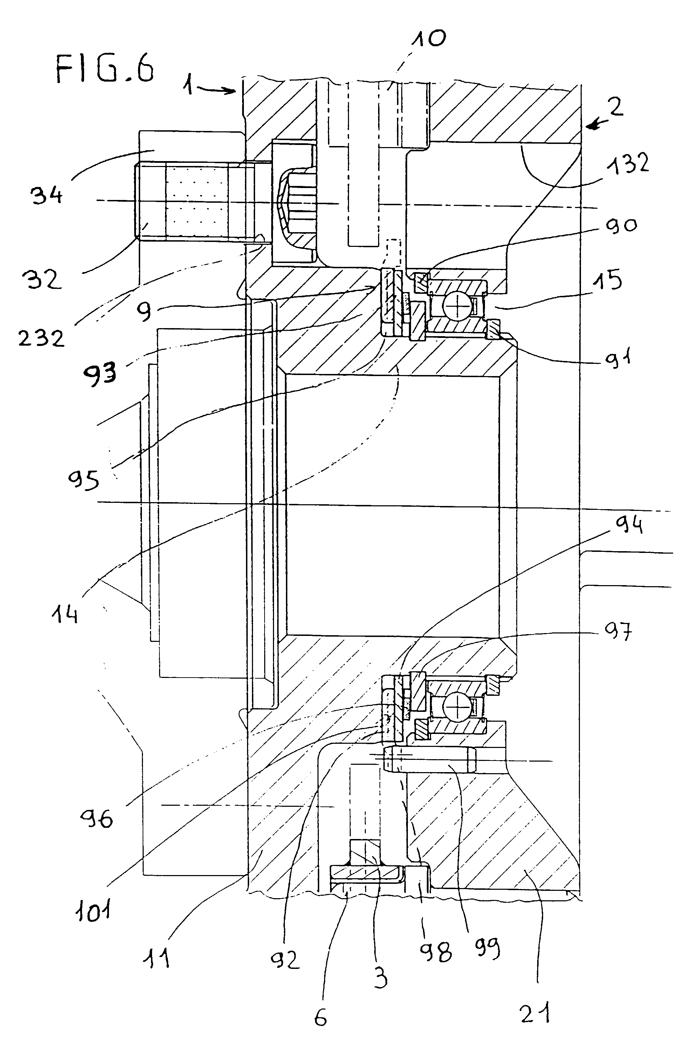

La pièce porteuse 60, ici métallique, par exemple en tôle emboutie, présente (figure 5) à sa périphérie interne un rebord 60B de même orientation axiale qui vient se loger dans un évidement 25 de la masse 2 ménagé à cet effet. Le rebord 60B est ménagé avec des échancrures 61 formant des mortaises et avec des dents 62 le prolongeant en sens axial. Les dents 62 initialement dans l'alignement du rebord 60B sont destinées en fait à être rabattues radialement par rapport à l'axe X-X, ici radialement en direction opposée à l'axe de l'ensemble.

Le rebord 60B avec ses dents 62 est destiné au logement de seconds moyens élastiques de frottement à action axiale agissant entre les deux masses de manière différée. Plus précisément entre le fond 60C de la partie transversale de la pièce porteuse 60 et les dents 62, on trouve successivement axialement une rondelle rotative de frottement 51, une rondelle d'application avec engrènement sans jeu 52, et une rondelle Belleville 55, en variante une rondelle élastique ondulée prenant appui directement sur les dents 62 pour exercer une force axiale sur le paquet de rondelles.

La rondelle 52 présente à sa périphérie interne des pattes (non visibles) formant des tenons engagés dans les mortaises 61 de la pièce porteuse 60.

Elle est ainsi immobilisée en rotation par rapport à la masse 1.

La rondelle rotative de frottement 51 présente à sa périphérie externe des zones de renfort en forme de surépaisseurs 51A avec des échancrures 51B propres à coopérer avec jeu circonférentiel avec des pions 156 portés par le plateau 21 de la masse 2 radialement à l'intérieur de la zone annulaire du plateau de réaction 21 destinée à coopérer avec le disque de friction (non représenté) de l'embrayage. Les renforts s'étendent autour de la rondelle 52. Ainsi la rondelle 51 est crénelée à sa périphérie externe.

La rondelle de frottement 51 est en d'autres termes engrenée avec un jeu de débattement avec les pions 156 d'orientation axiale de la masse 2. Ainsi les seconds moyens de frottement sont à action différée. Avantageusement la rondelle 51 est en matière synthétique renforcée par des fibres et les bords de ses échancrures 51B sont circulaires pour coopérer avec les pions cylindriques 156.

La rondelle Belleville 55 présente également des échancrures délimitant les zones de contact et d'application de force sur la rondelle d'application adjacente 52. On notera que la pièce porteuse 60 porte en majeure partie les moyens de frottement, seuls les pions 156 sont portés par la deuxième masse 2.

Le rebord 60B présente une structure en peigne avec une alternance d'échancrures 61 et de dents 62 bordées de pattes de stabilisation 70.

Les dents 62 sont amincies par rapport au rebord 60B de la pièce 60. Des entailles 63 ménagées de part et d'autre des dents 62, permettent de faciliter l'opération de pliage.

Pour aider encore le pliage des dents 62, on a ménagé deux pattes dites de stabilisation 70, de part et d'autre de chaque dent 62, définies d'un côté par une entaille 63 et de l'autre par l'échancrure 61. Ces pattes constituent pour l'outillage (non représenté) des moyens d'appui permettant de maîtriser par un guidage solide le pliage des dents 62.

Cette opération de pliage pourra s'effectuer de manière en soi connue : la pièce porteuse étant posée sur une table, une matrice d'outils interviendra en refoulant d'abord le Belleville de manière à dégager les pattes latérales pour l'appui d'éléments de guidage pour les outils de pliage des dents.

On notera que le roulement 15 a une faible taille, ce qui rend économique le double volant amortisseur, et que les vis de fixation 32 sont montées à la périphérie interne du plateau 11 et ce au voisinage du moyeu 14. Ce moyeu 14 est étagé et présente une portion de plus grand diamètre se raccordant au plateau 11. Cette portion (la périphérie externe de celle-ci) s'étend radialement au-dessus de la bague externe du roulement à billes. La portion de plus petit diamètre du moyeu sert de support à la bague interne du roulement à billes 15.

Un épaulement 101 est donc formé à la faveur du changement de diamètre.

De manière connue en soi ce plateau 11 présente à sa périphérie interne des trous 232 pour passage des vis 32 et le plateau de réaction 21 de la deuxième masse 2 présente, axialement en coïncidence avec les trous 232 et les vis 32, des passages 132 pour accès aux têtes des vis 32 et pour permettre la fixation du double volant sur le vilebrequin 34, un ou des outils passants de manière connue à travers les passages 132 pour venir en prise avec les têtes des vis 32 et visser celles-ci. Les axes 6 sont implantés sur une circonférence voisine de celle des trous 232, des passages 132 et des vis 32.

Les axes 6 alternent circonférentiellement avec les passages 132. On notera que les trous 232 présentent un lamage pour logement de la tête des vis de fixation 32. Ces têtes sont ici à six pans creux. Ici le diamètre des passages 132 est légèrement supérieur au diamètre des têtes de vis qui peuvent traverser ainsi les passages 132.

En variante le diamètre le diamètre des têtes des vis peut être supérieur à celui des passages 132 en sorte que les vis 32 sont retenues prisonnières.

On notera que la portion de plus grand diamètre du moyeu 14, de forme cylindrique et d'orientation axiale, dirigé vers le plateau 21, est déterminée par le diamètre d'implantation des vis 32.

Suivant l'invention des moyens de frottement à action axiale 9, dits premiers moyens de frottement, sont implantés au moins en majeure partie radialement en dessous desdits passages 132 et axialement entre le roulement à billes 15 et l'épaulement 101 formé sur le moyeu 14.

Comme mieux visible à la figure 6, on voit que la bague externe du roulement à billes 15 est calée axialement dans un sens par un épaulement formé à la périphérie interne du plateau de réaction 21 entourant en partie le moyeu 14.

Dans l'autre sens axial la bague externe du roulement 15 est calée axialement à l'aide d'un circlips 90 engagé dans une rainure formée dans l'alésage interne du plateau de réaction 21.

La bague interne du roulement à billes 15 entoure le moyeu 14 et est calée axialement dans un sens à la faveur d'un circlips 91 engagé dans une rainure pratiquée à la périphérie externe du moyeu 14, au voisinage de l'extrémité libre de celui-ci, et axialement dans l'autre sens axialement à la faveur d'un anneau 97, ici du type circlips, engagé dans une rainure du moyeu 14.

Grâce à cette disposition il est formé un sous-ensemble, moyeu 14 - moyens de frottement 9 de manière décrite ci-après.

Ce moyeu 14 est étagé en sorte qu'il présente un épaulement 101 d'orientation transversale à la faveur de son changement de diamètre.

Une rondelle de frottement 92 est destinée à venir frotter contre cet épaulement 101. Cette rondelle appartient aux moyens de frottement 9 à action axiale selon l'invention. Elle est en matière synthétique, telle que de la matière plastique renforcée par des fibres. Cette rondelle 92 est éloignée du plateau 21 en sorte qu'elle s'échauffe moins que la rondelle 51 et qu'elle est ventilée grâce aux passages 132, ce qui permet également de ventiler le roulement 14.

Ces moyens comportent également une rondelle d'application 93 soumise à l'action d'une rondelle élastique à action axiale 96 s'appuyant sur la rondelle 97.

La rondelle 92 est à l'image de la rondelle 51 et présente à sa périphérie externe en saillie radiale des zones de renfort 98 avec des échancrures propres à coopérer avec des pions 99 d'orientation axiale portés par le plateau de réaction 21 de la masse 2 circulairement en alternance avec les passages 132 dénommés ci-après par commodité passages d'accès. Les pions 99 sont engagés à force dans le plateau 21 et engrènent avec ou sans jeu avec les échancrures des zones de renfort 98 de la rondelle 92. Les échancrures sont peu larges circonférentiellement et engrènent ici sans jeu avec les pions 99.

La rondelle d'application 93 présente à sa périphérie interne au moins une patte radiale 94 engagée dans une rainure complémentaire 95 formée en surépaisseur à la périphérie externe du moyeu 14.

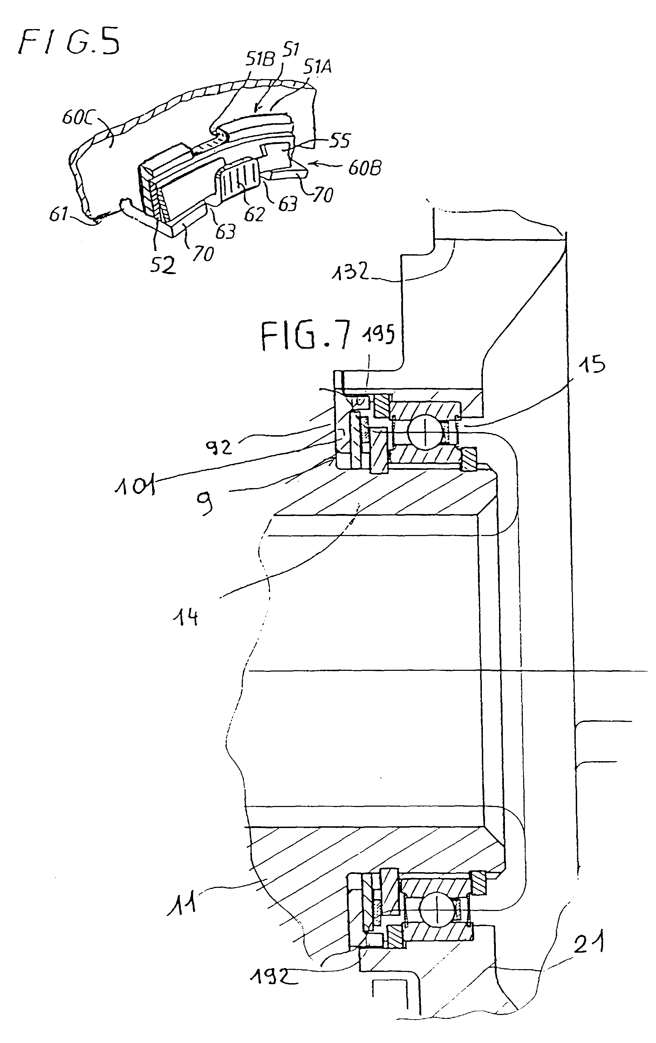

Les rainures 95 débouchent au niveau du circlips 97 servant d'appui à la bague intérieure du roulement 15. Le moyeu 14 présente ainsi trois portions de diamètres différents avec formation de deux épaulements à savoir l'épaulement 101 et un épaulement d'appui pour le circlips 97. Ici le diamètre servant de centrage à la bague interne du roulement 15 est rainuré en correspondance avec les rainures 95 pour permettre le passage des pattes 94. Pour cette raison un jeu apparaît dans les figures 6 et 7.

Ici le moyeu 14 présente une portion de plus diamètre se raccordant au plateau 11 et délimitant l'épaulement 101, une portion intermédiaire dans laquelle sont formées les rainures 95 et une portion de plus petit diamètre servant au support de la bague interne du roulement à billes 14.

Ici trois pattes 94 et trois rainures 95 sont prévues. Bien entendu ce nombre dépend des applications et il en est de même du nombre des pions 99 et des échancrures complémentaires 98 de la rondelle 92.

Grâce à ces dispositions, la rondelle d'application 93, ici métallique, est calée en rotation sur le moyeu 14 avec possibilité de déplacement axial sous l'action de la rondelle élastique 96 consistant ici en un diaphragme intercalé axialement entre les rondelles 93 et 97. En variante la rondelle 96 consiste en une rondelle ondulée.

Les premiers moyens de frottement 9 sont donc emprisonnés entre l'épaulement 101 et la rondelle 97 avec formation d'un sous-ensemble moyeu 14 - moyens de frottement 9.

Ainsi lors du mouvement relatif entre les deux masses 1,2 les pions 99 sont destinés à engrener avec ou sans jeu circonférentiel, selon les applications, avec la rondelle 92 en sorte qu'un frottement se produit, d'une part, entre la rondelle 92 et la rondelle d'application 93 et, d'autre part, avec la rondelle 92 et l'épaulement 101 appartenant à la première masse. La rondelle 92 est donc actionnée par la deuxième masse en sorte que le dispositif de frottement 9 est porté en majeure partie par la première masse en étant implanté en majeure partie radialement en dessous des passages d'accès 132 et des vis 32.

Seules les zones de renfort 98 font saillie radialement par rapport à l'épaulement 101 et au roulement à billes 15. Pour mémoire on rappellera lors du mouvement relatif entre les deux masses 1 et 2 que l'on obtient un double volant amortisseur avec des moyens élastiques, ici globalement à action radiale, de raideur variable. En effet, grâce au montage à articulation des cassettes 10 renfermant les ressorts 8, les efforts exercés par les moyens élastiques se décomposent en une force tangentielle active et en une force radiale inactive dirigée vers l'axe de l'ensemble et dont les efforts sont encaissés ici par la seconde masse.

Ainsi pour le régime de ralenti du moteur, la raideur des moyens élastiques est faible puis elle augmente pour les régimes (couple) plus élevés du moteur.

Le débattement angulaire entre les deux masses 1 et 2 peut être ainsi de grande valeur.

Au cours du mouvement relatif entre les deux masses les moyens de frottement 9 à action axiale interviennent de manière précitée et il en est de même des moyens de frottement à action axiale portés par la pièce porteuse 60.

Ainsi on peut avoir des frottements entrant successivement en action. Ici les pions 99 engrènent sans jeu circonférentiel avec la rondelle 92, tandis que les pions 156 engrènent avec jeu différencié de manière précitée avec la rondelle de frottement 51.

Bien entendu les premiers moyens de frottement 9 peuvent entrer en action, de manière différée, avant l'entrée en action des seconds moyens de frottement. Dans ce cas les pions 99 engrènent avec la rondelle 92 avec un jeu circonférentiel inférieur à celui prévu entre les pions 156 et la rondelle de frottement 51.

Grâce aux moyens de frottement 9, on atténue les bruits provoqués par la venue en prise des pions axiaux 156 avec les bords concernés des échancrures des renforts 98.

En fonction du débattement angulaire entre les deux masses on obtient ainsi des frottements de valeur croissante.

On notera que la pièce de rigidification 160 présente des trous 111 en coïncidence axiale avec des trous 112,113 pratiqués respectivement dans la pièce 60 et dans le plateau 11.

Les trous 111 à 113 axialement alignés définissent ainsi des passages débouchant sur la face du plateau de réaction 21 tournée vers le plateau 11. Pour plus de clarté on a représenté en pointillés à la figure 1 ce passage.

Suivant une caractéristique ces trous 111 à 113 sont disposés de part et d'autre des rondelles de guidage 4,5 des cassettes 10.

Ces trous 111 à 113 sont adjacents (permettent un accès) aux bords latéraux, d'orientation transversale, de la cassette 10 pour la position de repos du double volant (figure 4) et permettent de ventiler le double volant.

Ainsi on peut enfiler des tiges, d'une manière générale des colonnettes, dans les trous 111 à 113 ce qui permet de prépositionnel chaque cassette 10 et donc de monter aisément les axes 6 et 7. Ici on monte d'abord les axes 7 et les pièces 60,160 puis les axes 6.

Avantageusement ces tiges sont solidaires d'un disque servant d'appui au plateau 11.

Ainsi le double volant étant assemblé, on pose le plateau 11 sur le disque en enfilant les tiges précitées dans les trous 111 et 112. La longueur des tiges est telle, qu'elles viennent en butée contre le plateau de réaction 21. Ainsi lorsque l'on vient fixer le mécanisme d'embrayage sur la jupe 40 du plateau 21 les efforts dus à la fixation du mécanisme sont encaissés par les tiges en sorte que l'on ménage le roulement 15 et les moyens de frottement 9.

En effet ainsi qu'on le sait, le mécanisme d'embrayage comporte un diaphragme interposé entre le couvercle et le plateau de pression de l'embrayage. Lors du montage on pose le disque de friction au contact du plateau 21 puis on visse le couvercle, ce qui fait varier l'inclinaison du diaphragme et conduit à exercer des efforts pour comprimer ledit diaphragme prenant appui sur le couvercle et sur le plateau de pression.

Grâce aux tiges ces efforts de déformation du diaphragme ne sont pas encaissés par le roulement 15.

En outre on peut enfiler la deuxième masse 2, équipée du roulement 15, sur la première masse 1 équipée des moyens de frottement 9 sans risque de détérioration de ceux-ci et du roulement 15.

Bien entendu (figure 7) la rondelle 92 peut présenter à sa périphérie externe des pattes d'orientation axiale 192 engrenant avec des rainures 195 axiales pratiquées dans l'alésage interne (la périphérie interne) du plateau 21 dans lequel est monté le roulement 15. Dans ce cas les premiers moyens de frottement s'étendent radialement en dessous des passages d'accès 132 et des vis.

Ainsi on obtient une liaison à rotation par coopération de formes de la rondelle 92 avec la masse 2.

Ici les rainures 195 ont une forme semi circulaire et la partie sommitale des pattes 192 a une forme semi circulaire complémentaire.

On appréciera que cette disposition permet de supprimer les pions 99 de la figure 6.

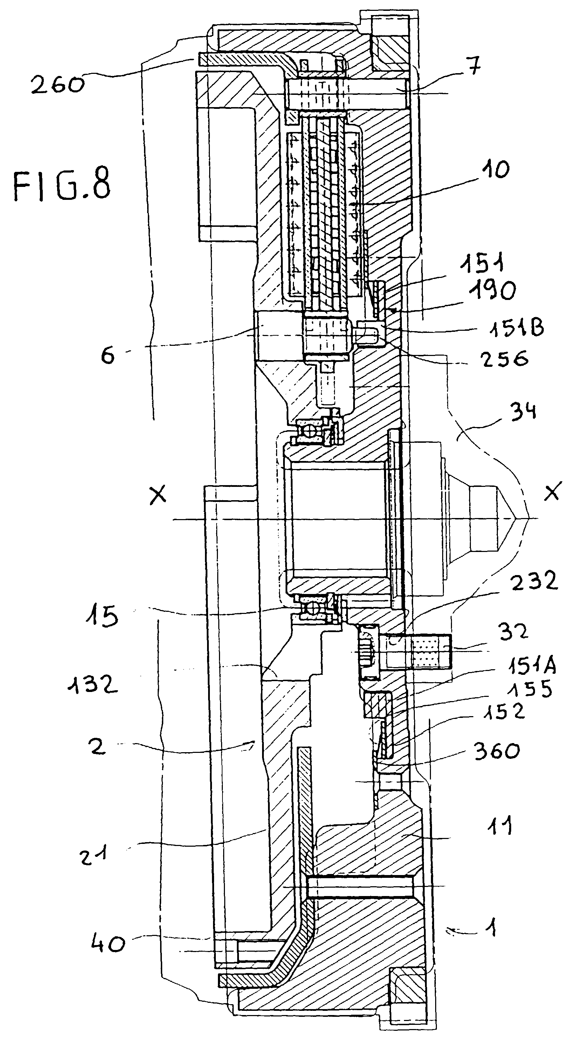

En variante l'axe 6 (figure 8) peut être prolongé en direction du plateau 11. Ce prolongement forme ainsi un pion d'orientation axiale 256 engrenant avec jeu circonférentiel avec une rondelle de frottement 151 en matière plastique appartenant aux seconds moyens de frottement à action axiale. Cette rondelle 151 est intercalée axialement entre la face du plateau 11 tournée vers le plateau 21 et une rondelle d'application 152 soumise à l'action d'une rondelle élastique 155, ici une rondelle Belleville, prenant appui sur un épaulement formé à la faveur d'une plaque 360 fixée par rivetage sur le plateau 11. La rondelle 152 présente à sa périphérie externe des pattes engagées dans des rainures du plateau 11 fermées par la plaque 360.

Comme à la figure 1, la rondelle 151 présente des zones de renfort en 151A avec des échancrures 151B du même type que les renforts et les échancrures de la rondelle 51 de la figure 1. Ici les renforts sont dirigés radialement vers l'axe de l'ensemble et les pions 256 sont destinés à engrener avec les échancrures 151. Pour plus de précisions, on se reportera au document FR94 15 367 du 16 décembre 1994.

Il est ainsi formé un dispositif de frottement 190 éloigné du plateau 21 et moins sensible à la température dudit plateau de réaction.

Ce double volant présente au niveau du roulement 15 des moyens de frottement 9 du type de ceux de la figure 7. Ces moyens 9 sont, comme à la figure 7, implantés radialement en dessous des vis 32 et des passages 132.

On notera qu'une seule pièce de rigidification 260 est prévue et qu'elle remplace les pièces 160 et 60 de la figure 1. Cette pièce 260 est rivetée sur le plateau 11 et présente des dégagements au niveau des cassettes 110.

Dans tous les cas les premiers moyens de frottement 9 selon l'invention atténuent les bruits provoqués par des deuxièmes moyens de frottement, à action axiale et différée, agissant entre les deux masses 1,2 et implantés radialement au-dessus des premiers moyens de frottement selon l'invention, lesdits bruits étant dus à l'annulation du jeu d'engrènement prévu entre une rondelle et des saillies.

On notera que le déplacement du voile 3 par rapport aux rondelles de guidage 4,5 est guidé par deux patins 15 solidaires des rondelles de guidage 4,5. Ces patins 15 guident radialement le voile 3. Ces patins 15 ont en section une forme de U et forment des rainures de guidage pour les bords latéraux du voile parallèles aux ressorts. Ces patins 15, ici en matière plastique à faible coefficient de frottement, présentent des picots 16 engagés par encliquetage dans des ouvertures complémentaires (figure 3) pratiquées dans les bords latéraux des rondelles de guidage 4,5 formant un boîtier pour le logement des patins dont la base s'appuie sur les bords périphériques des rondelles de guidage 4,5.

Par ailleurs les extrémités des ressorts 8 s'appuient sur des coupelles en matière plastique 17,18 interposées entre lesdites extrémités des ressorts 8 et les bords d'appui des fenêtres pratiquées en vis-à-vis dans le voile 3 et les rondelles de guidage 4,5 (figures 3 et 4).

Chaque coupelle 17,18 présente un centreur pour centrer les ressorts interne de la paire de ressorts 8 et présente un bloc en matière élastique à son extrémité libre. Ce bloc pénètre à l'intérieur des ressorts 8.

Ainsi grâce aux patins 15, le déplacement du voile se fait sans risque de coincement et on évite grâce aux coupelles 17,18 les bruits provoqués par venue à spires jointives des ressorts 8.

Bien entendu la présente invention n'est pas limitée à l'exemple de réalisation décrit. En particulier les moyens élastiques peuvent consister en des ressorts à boudin 13 avec des extrémités conformées en crochets pour venir en prise avec les axes 6 et 7, de tels ressorts étant visibles à la figure 13 du document WO 95/17618 précité.

D'une manière générale les moyens élastiques peuvent avoir l'une des formes décrites dans ce susmentionné document.

Les cassettes 10 peuvent être du type monoressort comme décrit par exemple dans le document WO 94/27062, le ressort étant monté dans un cylindre, lui-même monté à articulation sur l'une des masses, ledit ressort étant soumis à l'action d'un épaulement porté par une tige de piston traversant le fond du cylindre et montée à articulation sur l'autre masse.

En variante les moyens élastiques peuvent être à action circonférentielle et agir entre des bras du voile 3 fixé par rivetage, au niveau de l'axe 6 de la figure 1, à la masse 2 et des moyens de guidage formés à la périphérie externe du plateau 11. Par exemple le plateau 11 présente des pièces d'appui en regard d'emboutis formés dans la pièce 60.

Dans tous les cas on appréciera que le roulement 15 est de taille réduite tant axialement que radialement.

La rondelle de butée 97 peut être fixée par un montage du type baïonnette sur le moyeu 14, grâce notamment aux rainures axiales pratiquées dans le moyeu 14 et débouchant dans une gorge annulaire. Dans ce cas la rondelle 97 présente des pattes à sa périphérie interne et au moins une patte à sa périphérie externe pour sa rotation à l'aide d'un outil.

En variante la rondelle 97 est emmanchée à force.

On appréciera que les moyens élastiques 8,10 sont montés à articulation à la périphérie externe de la première masse 1 et à articulation à la périphérie interne de la seconde masse 2, en sorte qu'ils ont une grande longueur. Les moyens de frottement 9 sont implantés radialement en dessous desdits moyens élastiques. Bien sûr on peut inverser les structures, les moyens élastiques 8,10 étant alors montés à articulation à la périphérie interne de la première masse 1 et à articulation à la périphérie externe de la seconde masse 2.

On appréciera que la grande taille des passages 132 permet une meilleure ventilation des premiers moyens de frottement 9. En effet, du fait que ces passages 132 ont un diamètre supérieur à celui des têtes des vis 32, un faible espace existe entre la bague externe du roulement et lesdits passages 132, en sorte que les passages 132 débouchent à proximité de la rondelle de frottement 92.

## Revendications

1. Double volant amortisseur de torsion, notamment pour véhicule automobile, comportant deux masses coaxiales (1,2) montées mobiles l'une par rapport à l'autre à l'encontre de moyens élastiques (8) et de moyens de frottement à action axiale (9), dans lequel l'une des masses (1,2), dite première masse (1), est destinée à être fixée à un arbre menant à la faveur de vis (32) traversant des trous (232) pratiqués à la périphérie interne d'un plateau (11) appartenant à la première masse (1), tandis que l'autre masse, dite deuxième masse (2), forme un plateau de réaction (21) pour un embrayage à friction et comporte des passages (132) en coïncidence axiale avec les trous (232) du plateau (11) de la première masse (1) pour accès aux vis (32) et dans lequel la seconde masse (2) est montée tournante par rapport à la première masse (1) à l'aide d'un roulement à billes (15) intervenant entre la périphérie externe d'un moyeu (14) étagé solidaire du plateau (11) de la première masse (1) et la périphérie interne du plateau de réaction (21) de la deuxième masse (2), ledit roulement (15) étant implanté radialement en dessous des passages (132) de la seconde masse (2), tandis qu'un épaulement (101) est formé à la faveur de l'étagement du moyeu (14), caractérisé en ce que les moyens de frottement (9) à action axiale, dits premiers moyens de frottement, sont implantés au moins en majeure partie radialement en dessous desdits passages (132) de la deuxième masse (2) et axialement entre l'épaulement (101) du moyeu (14) de la première masse (1) et le roulement à billes (15).

2. Double volant selon la revendication 1, caractérisé en ce que lesdits moyens de frottement (9) comportent une rondelle de frottement (92) interposée entre l'épaulement (101) du moyeu (14) de la première masse (1) et une rondelle d'application (93)calée en rotation sur le moyeu (14) de la première masse (1) en étant soumise à l'action d'un moyen élastique à action axiale (96) prenant appui sur une rondelle (97) calée axialement sur le moyeu (14) de la première masse (1).

3. Double volant selon la revendication 2, caractérisé en ce que la rondelle de frottement (92) est propre à engrener avec le plateau de réaction (21) de la seconde masse (2).

4. Double volant selon la revendication 3, caractérisé en ce que le plateau de réaction (21) de la première masse (1) porte des pions (99) d'orientation axiale propres à engrener avec des échancrures pratiquées dans un renfort que présente la rondelle de frottement (92) à sa périphérie externe.

5. Double volant selon la revendication 3, caractérisé en ce que la rondelle de frottement (92) présente à sa périphérie externe des pattes (192) d'orientation axiale propres à engrener avec des rainures axiales (195) ménagées à la périphérie interne du plateau de réaction (21) de la seconde masse (2).

6. Double volant selon la revendication 2, caractérisé en ce que le moyeu (14) présente trois portions de diamètres différents, à savoir une portion de plus grand diamètre se raccordant à un plateau (11), que présente la première masse (1), une portion de diamètre intermédiaire pour calage en rotation de la rondelle d'application (93) et une portion de plus petit diamètre pour montage de la bague interne du roulement à billes (14).

7. Double volant selon la revendication 6, caractérisé en ce que la hauteur de l'épaulement (101) du moyeu (14) est globalement égale à la hauteur du roulement à billes (14).

8. Double volant selon la revendication 1, caractérisé en ce que les moyens élastiques (8,10) comportent des cassettes (10) articulées sur l'une et l'autre desdites masses.

9. Double volant selon la revendication 1, caractérisé en ce qu'il comporte des seconds moyens de frottement, à action axiale et différée intervenant entre les deux masses (1,2), implantés radialement au-dessus des premiers moyens de frottement (9).

## Patentansprüche

1. Zweimassen-Torsionsdämpfungsschwungrad, insbesondere für Kraftfahrzeuge, umfassend zwei koaxiale Massen (1, 2), die im Verhältnis zueinander beweglich entgegen elastischen Mitteln (8) und axial wirksamen Reibungsmitteln (9) gelagert sind, wobei eine der Massen (1, 2), die als erste Masse bezeichnet wird, zur Befestigung an einer treibenden Welle anhand von Schrauben (32) bestimmt ist, die durch Löcher (232) hindurchgehen, die am inneren Umfang einer zur ersten Masse (1) gehörenden Platte (11) eingearbeitet sind, während die andere Masse, die als zweite Masse (2) bezeichnet wird, eine Gegenanpreßplatte (21) für eine Reibungskupplung bildet und Durchgänge (132) in axialer Übereinstimmung mit den Löchern (232) der Platte (11) der ersten Masse (1) für den Zugang zu den Schrauben (32) umfaßt, und wobei die zweite Masse (2) drehbar im Verhältnis zur ersten Masse (1) anhand eines Kugellagers (15) gelagert ist, das zwischen dem äußeren Umfang einer fest mit der Platte (11) der ersten Masse (1) verbundenen abgestuften Nabe (14) und dem inneren Umfang der Gegenanpreßplatte (21) der zweiten Masse (2) zum Einsatz kommt, wobei das besagte Kugellager (15) radial unterhalb der Durchgänge (132) der zweiten Masse (2) angeordnet ist, während mittels der Abstufung der Nabe (14) eine Schulter (101) gebildet wird, **dadurch gekennzeichnet,** daß die als erste Reibungsmittel bezeichneten axial wirksamen Reibungsmittel (9) wenigstens zum größten Teil radial unterhalb der besagten Durchgänge (132) der zweiten Masse (2) und axial zwischen der Schulter (101) der Nabe (14) der ersten Masse (1) und dem Kugellager (15) angeordnet sind.

2. Zweimassenschwungrad nach Anspruch 1, **dadurch gekennzeichnet,** daß die besagten Reibungsmittel (9) eine Reibscheibe (92) umfassen, die zwischen der Schulter (101) der Nabe (14) der ersten Masse (1) und einer Anpreßscheibe (93) eingefügt ist, die drehfest an der Nabe (14) der ersten Masse (1) angebracht und der Wirkung eines axial wirksamen elastischen Mittels (96) ausgesetzt ist, das auf einer Scheibe (97) zur Auflage kommt, die axial an der Nabe (14) der ersten Masse (1) gesichert ist.

3. Zweimassenschwungrad nach Anspruch 2, **dadurch gekennzeichnet,** daß die Reibscheibe (92) mit der Gegenanpreßplatte (21) der zweiten Masse (2) in Eingriff kommen kann.

4. Zweimassenschwungrad nach Anspruch 3, **dadurch gekennzeichnet,** daß die Gegenanpreßplatte (21) der ersten Masse (1) axial ausgerichtete Stifte (99) trägt, die mit Aussparungen in Eingriff kommen können, die in eine Verstärkung eingearbeitet sind, die die Reibscheibe (92) an ihrem äußeren Umfang aufweist.

5. Zweimassenschwungrad nach Anspruch 3, **dadurch gekennzeichnet,** daß die Reibscheibe (92) an ihrem äußeren Umfang axial ausgerichtete Ansätze (192) aufweist, die mit axialen Nuten (195) in Eingriff kommen können, die am inneren Umfang der Gegenanpreßplatte (21) der zweiten Masse (2) vorgesehen sind.

6. Zweimassenschwungrad nach Anspruch 2, **dadurch gekennzeichnet,** daß die Nabe (14) drei Abschnitte mit unterschiedlichen Durchmessern aufweist, und zwar einen Abschnitt mit größerem Durchmesser, der sich an eine Platte (11) anschließt, die die erste Masse (1) aufweist, einen Abschnitt mit mittlerem Durchmesser für die drehfeste Anbringung der Anpreßscheibe (93) und einen Abschnitt mit kleinerem Durchmesser für die Lagerung des Innenrings des Kugellagers (14).

7. Zweimassenschwungrad nach Anspruch 6, **dadurch gekennzeichnet,** daß die Höhe der Schulter (101) der Nabe (14) insgesamt gleich der Höhe des Kugellagers (14) ist.

8. Zweimassenschwungrad nach Anspruch 1, **dadurch gekennzeichnet,** daß die elastischen Mittel (8, 10) Kassetten (10) umfassen, die an der einen und der anderen der besagten Massen angelenkt sind.

9. Zweimassenschwungrad nach Anspruch 1, **dadurch gekennzeichnet,** daß es axial und versetzt wirksame zweite Reibungsmittel umfaßt, die zwischen den beiden Massen (1, 2) zum Einsatz kommen und radial oberhalb der ersten Reibungsmittel (9) angeordnet sind.

## Claims

1. A torsion-damped double flywheel, in particular for a motor vehicle, comprising two coaxial masses (1, 2) mounted for movement of one with respect to the other against the action of resilient means (8) and axially acting friction means (9), wherein one of the masses (1, 2), referred to as a first mass (1), is adapted to be fixed to a driving shaft by means of screws (32) extending through holes (232) formed at the inner periphery of a plate (11) which is part of the first mass (1), while the other mass, referred to as a second mass (2), constitutes a reaction plate (21) for a friction clutch and includes passages (132) in axial coincidence with the holes (232) of the plate (11) and the first mass (1), whereby to afford access to the screws (32), and wherein the second mass (2) is mounted for rotation with respect to the first mass (1) by means of a ball bearing (15) interposed operatively between the outer periphery of a stepped hub (14), fixed to the plate (11) of the first mass (1), and the inner periphery of the reaction plate (21) of the second mass (2), the said bearing (15) being located radially inwardly of the passages (132) of the second mass (2), while a shoulder (101) is defined at the step of the hub (14), characterised in that at least the greater part of the axially acting friction means (9), referred to as first friction means, is fitted radially inwards of the said passages (132) of the second mass (2), and axially between the shoulder (101) of the hub (14) of the first mass (1) and the ball bearing (15).

2. A double flywheel according to Claim 1,
characterised in that the said friction means (9) comprise a friction ring (92) which is interposed between the shoulder (101) of the hub (14) of the first mass (1) and an application ring (93) which is mounted in rotation on the hub (14) of the first mass (1), being subjected to the action of an axially acting resilient means (96) bearing on a ring (97) located axially on the hub (14) of the first mass (1).

3. A double flywheel according to Claim 2,
characterised in that the friction ring (92) is adapted to engage with the reaction plate (21) of the second mass (2).

4. A double flywheel according to Claim 3,
characterised in that the reaction plate (21) of the first mass (1) carries axially orientated pins (99) adapted to mesh with notches formed in a reinforcing element which the friction ring (92) has at its outer periphery.

5. A double flywheel according to Claim 3,
characterised in that the friction ring (92) has at its outer periphery axially orientated lugs (192) which are adapted to mesh with axial grooves (195) formed at the inner periphery of the reaction plate (21) of the second mass (2).

6. A double flywheel according to Claim 2,
characterised in that the hub (14) has three portions of different diameters, namely a portion of greatest diameter connected to a plate (11) of the first mass (1), a portion of intermediate diameter for mounting in rotation on the application ring (93), and a portion of smallest diameter for mounting of the inner ring of the ball bearing (14).

7. A double flywheel according to Claim 6,
characterised in that the height of the shoulder (101) of the hub (14) is generally equal to the height of the ball bearing (14).

8. A double flywheel according to Claim 1,
characterised in that the resilient means (8, 10) comprise cassettes (10) articulated on one of the said masses and on the other.

9. A double flywheel according to Claim 1,
characterised in that it includes second friction means, acting axially and differentially, and working between the two masses (1, 2), being located radially inwards of the first friction means (9).
